# EUROPEAN PATENT SPECIFICATION

(11) **EP 1 604 851 B1**
(45) Date of publication and mention of the grant of the patent: **06.02.2008**
(21) Application number: 04380125.7
(22) Date of filing: 10.06.2004
(51) Int. Cl.: B60J 5/04

(54) **Lateral reinforcement for absorption of impacts on vehicle doors**
Seitliche Verstärkung zur Aufname von Stossenergien für Kfz-Türen
Renfort latéral d'absorption d'énergie de choc pour porte de véhicule

(43) Date of publication of application: 14.12.2005
(73) Proprietor: Autotech Engineering, A.I.E., 48220 Abadino (Vizcaya) (ES)
(72) Inventor: Lorenzo Perez, Cesar, 46220 Abadino (Vizcaya) (ES)
(74) Representative: Carpintero Lopez, Francisco

(56) References cited:
- DE-A- 4 131 194
- US-A- 5 992 922
- US-A1- 2002 195 836

## Description

### OBJECT OF THE INVENTION

The present invention relates to a lateral reinforcement for vehicle doors which has an optimised configuration which allows the energy absorbed by said reinforcement to be enhanced in the event of a lateral impact taking place against the vehicle.

The object of the invention is that the enhancement of absorbed energy be effected according to a more uniform force-displacement curve than with current reinforcements.

### BACKGROUND OF THE INVENTION

When a vehicle suffers a lateral collision, be this produced by another vehicle or by any object, serious deformation of the door takes place toward the interior of the compartment endangering the occupants, be this through the actual deformation of the door or through the possible intrusion of impacting elements.

With the objective of preventing the intrusion of whatever element into the compartment of the vehicle from causing injury to the occupants, components and systems are designed which endeavour to reduce or suppress the negative effects which these intrusions can have on the driver and the passengers, the incorporation of door reinforcements being normal.

This type of impact produces a progressive deformation of the door, on the occurrence of which the door reinforcement begins to act, which is intended to absorb energy and impede the intrusion inside the compartment.

In general terms this type of reinforcement consists of some longitudinal cross beams which are welded to the structure of the door. In a conventional design of side door reinforcement, it can be seen that the solution adopted by the great majority of the manufacturers consists in effecting an insertion in the longitudinal direction of the cross beam. The longitudinal insertion extends over all its dimension in order to increase the inertia of the cross beam, supporting a great part of the force of the impact.

Such a cross beam is shown in US 2002/195836 A1.

This type of reinforcement has the drawback that in the initial moment of impact the reinforcement begins to collapse acquiring a deformation in its central area that grows progressively until the plastic limit of the material is surpassed, as from which point the reinforcement absorbs no more energy and behaves like a hinge.

Generally the length and width of the reinforcement are given by the motor vehicle manufacturer, and the depth of the insertions (for the case of hot stamping) is restricted by the diameter of the cooling tubes of the die, which signifies that as a whole it is difficult to optimise these elements.

### DESCRIPTION OF THE INVENTION

The lateral reinforcement object of the present invention offers a configuration which increases the absorbed deformation and delays the appearance of the aforesaid hinge effect. For this, the lateral reinforcement disclosed incorporates a central insertion and some end insertions separated from the central insertion by means of some transition areas or regions of less depth that the insertions.

With this new cross beam, on occurrence of the lateral impact, the reinforcement begins to be deformed in the area of the central insertion but, before its plastic limit is surpassed and the hinge effect takes place, the deformation of the reinforcement is transferred to the less strong areas thereof, that is, to the transition areas which collaborate in the energy absorption and delay the hinge effect in the central area.

Thus, the tensile forces are distributed along the reinforcement achieving more uniform force-displacement curves, so that the absorbed total energy is considerably greater.

Furthermore, the reinforcement has, over all its length, a section with a wave profile which allows the effective surface of the reinforcement to be increased, augmenting the moment of inertia of the cross beam in the direction of the movement, which is finally converted into greater energy absorption by said cross beam.

Also, the incorporation of some longitudinal webs has been foreseen, coinciding with the area of the central insertion which increases the inertia of the central section.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1. - It shows a general view of the reinforcement object of the invention mounted on the corresponding door of the vehicle.
Figure 2. - It shows a general view in perspective of the reinforcement in which the insertions can be appreciated and also the sectors supporting the reinforcement.
Figure 3. - It shows a plan view of the reinforcement, as well as the sections A-A and B-B of the same in detail, which reflect the profiles of the reinforcement in the insertion regions and in the transition regions between insertions.
Figure 4. - It shows the energy absorption curves for conventional reinforcement designs (curve A) and for the reinforcement design object of the invention (curve B).

### PREFERRED EMBODIMENT OF THE INVENTION

Hereunder and in the light of the figures described, a way of embodying the lateral reinforcement object of this invention is disclosed.

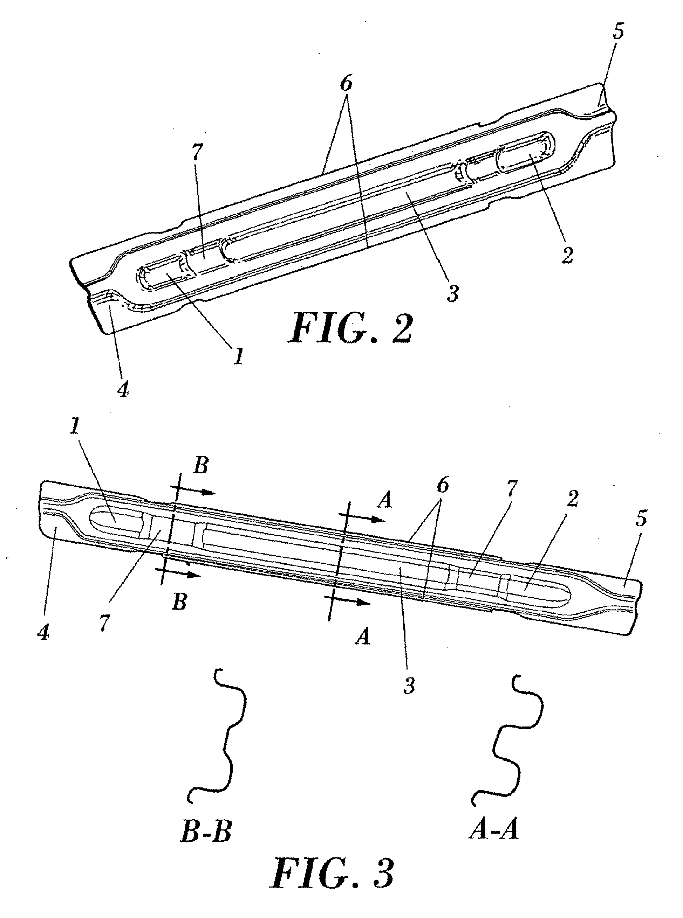

The lateral reinforcement object of this invention, as is clearly observed in figures 2 and 3, incorporates a central insertion (3), in the longitudinal direction, as well as two end insertions (1) and (2), also longitudinal, and separated from the central insertion (3) by some transition areas (7) which are of less depth.

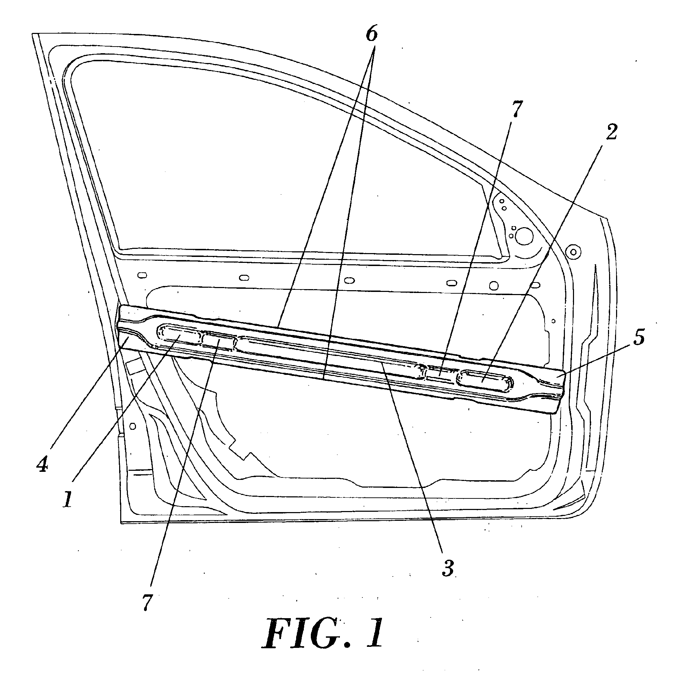

The lateral reinforcement incorporates some supporting sectors (4) and (5) through which it is welded to the door, as observed in figure 1.

In figure 3 some lateral sections of the reinforcement have been included in which one observes clearly how the transition areas (7) are of less depth than the insertions (1), (2), (3), it being also observed clearly how the whole reinforcement has a wave profile which increases the effective surface area of the reinforcement and the moment of inertia of the cross beam in the direction of the impact, which signifies an increase in the absorbed total energy.

As is also observed in figures 2 and 3, the cross beam incorporates some longitudinal lateral webs (6), in correspondence with its central sector which assist in increasing even more the inertia in this area.

After these longitudinal webs (6) an area has been foreseen with an absence of material and, thereafter, in the area corresponding to the end sectors (4, 5), some plane webs for support on the door.

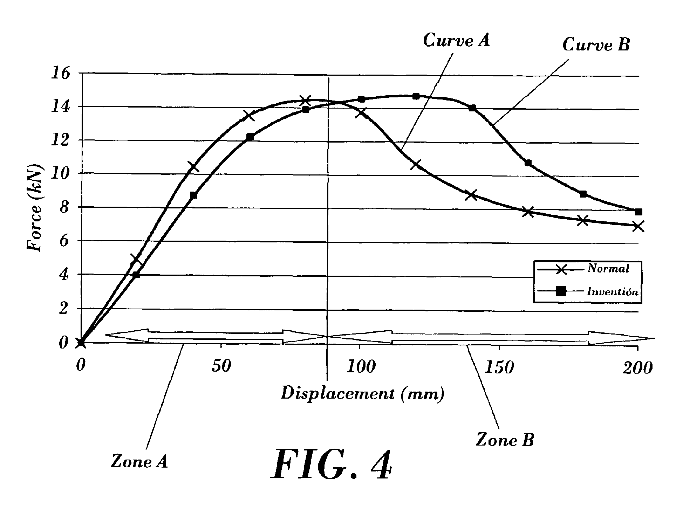

For a conventional reinforcement design, on occurrence of the lateral impact, said reinforcement begins to collapse acquiring a growing deformation with time in the central area of the longitudinal insertion thereof until the plastic limit of the material is surpassed, as from which time a hinge effect takes place wherein the piece behaves more like a mechanism than like an energy absorbing structure. This phenomenon can be appreciated in curve A (areas 1 and 2) represented in figure 4. This hinge effect signifies a reduction in the energy absorption.

In figure 4 curve A illustrates the behaviour of lateral reinforcements conformed by means of hot stamping, and designed in a conventional manner, at the time of suffering the impact. The deformation of the reinforcement follows an energy absorption curve which has initially a high value of the force corresponding to relatively low values of deformation (area 1) and is then followed by a sharp drop in the force which is reflected in a substantial decrease in the energy absorption on the part of the reinforcement (area 2).

The ideal situation consists in obtaining uniformity in the force with respect to the displacement and, therefore, a force-displacement curve as flat as possible which signifies maximizing the absorbed energy.

With the reinforcement object of the invention, on occurrence of the lateral impact, this reinforcement begins to be deformed in the central insertion (3), with cross section A-A, this section being that of greatest inertia and that which is potentially capable of absorbing most energy before the material thereof surpasses its plastic limit.

Before the hinge effect takes place in the central section A-A, as from which time the energy absorption would drop considerably, the presence of the end insertions (1, 2) and the transition region, of cross section B-B, of considerably less inertia, allows the overall deformation of the reinforcement to be extended to these less strong transition sections making them collaborate in a significant manner in the energy absorption and retarding the hinge phenomenon of the central sector (3). All this results in an increment of the absorbed total energy and allows force-displacement curves to be obtained, like curve B of figure 3. As is observed in this graph, despite the behaviour in area 1 being somewhat worse than in the conventional designs, in area 2 it is considerably better, or, in other words, the force is more stable and uniform with respect to the displacement and, therefore, the absorbed total energy is considerably greater.

## Claims

1. - Lateral reinforcement for absorption of impacts on vehicle doors which incorporates some end support sectors (4, 5) which are welded to the door and insertions to increase the inertia of the reinforcement, **characterised in that** it has a central insertion (3) and some end insertions (1, 2), of equal depth, the end insertions (1, 2) being separated from the central insertion (3) by transition regions (7), of less depth than insertions (1), (2) and (3), with the particularity that the reinforcement has a wave profile as cross-section, both in the areas with insertions and in the transition areas (7), which augments the effective surface area of the reinforcement, its moment of inertia in the direction of the deformation and the absorbed energy.

2. - Lateral reinforcement for absorption of impacts on vehicle doors according to claim 1, **characterised in that** it incorporates some longitudinal lateral webs (6), with a wave profile, coinciding approximately with the area of the central insertion (3) in order to increase the inertia of the reinforcement in this area, there being defined after the aforementioned webs (6) some areas with an absence of material and thereafter, in the areas next to the ends (4, 5), some plane webs for support and securing to the door.

## Patentansprüche

1. Seitliche Verstärkung zur Absorption von Aufprallen auf Fahrzeugtüren, welche einige Endtragabschnitte (4,5) enthält, die mit der Tür verschweißt sind, sowie Einlageteile zur Erhöhung der Trägheit der Verstärkung, **dadurch gekennzeichnet, dass** sie ein zentrales Einlageteil (3) und einige Endeinlageteile (1,2) mit gleicher Tiefe hat, wobei die Endeinlageteile (1,2) von dem zentralen Einlageteil (3) durch Übergangsbereiche (7) mit einer geringeren Tiefe als die Einlageteile (1), (2) und (3) getrennt sind, mit der Besonderheit, dass die Verstärkung im Querschnitt ein Wellenprofil sowohl in den Bereichen mit den Einlageteilen als auch in den Übergangsbereichen (7) aufweist, welches den effektiven Oberflächenbereich der Verstärkung, ihr Trägheitsmoment in Richtung der Verformung und die absorbierte Energie steigert.

2. Seitliche Verstärkung zur Absorption von Aufprallen auf Fahrzeugtüren nach Anspruch 1, **dadurch gekennzeichnet, dass** sie einige längsgerichtete Seitenstege (6) mit einem Wellenprofil enthält, die etwa mit dem Bereich des zentralen Einlageteils (3) übereinstimmen, um die Trägheit der Verstärkung in diesem Bereich zu erhöhen, wobei dort nach den vorgenannten Stegen (6) einige Bereiche ohne Material und danach, in den Bereichen neben den Enden (4,5), einige flache Stege zur Unterstützung und Anbringung an der Tür definiert sind.

## Revendications

1. Renfort latéral d'absorption de chocs sur des portes de véhicule qui regroupe quelques secteurs (4, 5) de support terminaux qui sont soudés à la porte et des insertions afin d'augmenter l'inertie du renfort, **caractérisé en ce qu'**il possède une insertion centrale (3) et quelques insertions (1, 2) d'extrémité de profondeur égale, les insertions d'extrémité (1, 2) étant séparées de l'insertion centrale (3) par des zones de transition (7) de profondeur moins importante que les insertions (1), (2) et (3) avec la particularité que le renfort présente un profilé ondulé comme section transversale, à la fois dans les zones dotées des insertions et dans les zones de transition (7), ce qui augmente la surface utile du renfort, son moment d'inertie dans la direction de la déformation et l'énergie absorbée.

2. Renfort latéral d'absorption de chocs sur des portes de véhicule selon la revendication 1, **caractérisé en ce qu'**il regroupe quelques bandes (6) latérales, longitudinales dotées d'un profilé ondulé, coïncidant approximativement avec la zone de l'insertion centrale (3) dans le but d'augmenter l'inertie du renfort dans cette zone, quelques zones sans matériau y étant définies après les bandes susmentionnées (6) et après, dans les zones proches des extrémités (4, 5), quelques bandes planes à des fins de support et de fixation à la porte.
